# EUROPEAN PATENT APPLICATION

(11) **EP 3 604 737 A1**
(43) Date of publication of application: **05.02.2020**
(21) Application number: 18778298.2
(22) Date of filing: 27.03.2018
(51) Int. Cl.: F01D 1/32

(54) **CENTRIPETAL TURBINE APPARATUS COMPRISING NOZZLES INSIDE SEALED TURBINE**

(30) Priority: 27.03.2017 KR 20170038348
(71) Applicant: Song, Kil Bong, Seoul 08589 (KR)
(72) Inventor: Song, Kil Bong, Seoul 08589 (KR)
(74) Representative: Cabinet Chaillot
(86) International application number: PCT/KR2018/003577
(87) International publication number: WO 2018/182272

(57) **Abstract**

The purpose of the present invention is to minimize fluid leakage and pressure leakage, and a turbine apparatus of the present invention comprises: a turbine (510) rotating together with a turbine shaft (513) in response to an inflow of fluid; a turbine cover (520) coupled to an upper end of the turbine (510) to seal the turbine (510); a lower nozzle plate (350) and an upper nozzle plate (370) coupled to each other in the turbine (510); a plurality of nozzles (380) coupled between the lower nozzle plate (350) and the upper nozzle plate (370) to control the amount of fluid flowing into the turbine (510); a through pipe (356) coupled to the center of an upper surface of the lower nozzle plate (350) and passing through the lower nozzle plate (350) and the upper nozzle plate (370); and a control pipe (322) rotating inside the through pipe (356) for opening and closing the nozzles (380).

## Description

### [Technical Field]

The present invention relates to a turbine apparatus using a fluid, and more particularly, to a turbine apparatus including a nozzle in a turbine sealed to suppress a leakage of a supply fluid, such as water, steam, and the like, and a pressure leak.

### [Background Art]

Since conventional turbines operate using a collision or a reaction force of a fluid, when a high-pressure fluid is supplied, it is difficult to avoid a pressure leak.

All general turbines include a rotating turbine and a case accommodating the turbine such that pressure of a fluid supplied from the outside acts on the case. Accordingly, when a space is present between the case and the turbine, pressure generally leaks therebetween.

In the case of steam turbines, since not only pressure leaks through a gap between a rotator and a case but also pressure leaks through a gap between blades of the turbine, the pressure leaks may be a part of loss.

### [Disclosure]

### [Technical Problem]

The present invention is directed to providing a turbine apparatus configured to minimize a fluid leak and a pressure leak.

The present invention is also directed to providing a turbine apparatus capable of increasing efficiency of a turbine by providing a structure for converting both pressure acting on the turbine and a head, which is potential energy, into a rotating force in low-head hydroelectric power generation facilities. Particularly, the present invention is directed to providing a structure of a turbine apparatus which allows a fluid to remain in a turbine until energy of the fluid is exhausted so as to convert an entirety of kinetic energy of the fluid into a rotating force.

### [Technical Solution]

One aspect of the present invention provides a centripetal turbine apparatus including a turbine (510) which includes a funnel-shaped turbine container (511), a radial-shaped turbine blade (512) coupled inside the turbine container (511), an upper plate (515) and a lower plate (516) formed inside the turbine blade (512), an inner container (517) between the upper plate (515) and the lower plate (516), and a shaft insertion frame (514), into which a turbine shaft (513) is inserted, and which rotates with the turbine shaft (513) according to an inflow of a fluid, a turbine cover (520) coupled with a top end of the turbine (510) to seal the turbine (510), a lower nozzle plate (350) and an upper nozzle plate (370) coupled with each other in a space above the upper plate (515) in the turbine (510), a plurality of nozzles (380) coupled between the lower nozzle plate (350) and the upper nozzle plate (370) and configured to adjust an amount of the fluid which flows into the turbine (510), a through pipe (356) coupled with a center of a top surface of the lower nozzle plate (350) and configured to pass through the upper nozzle plate (370), and an adjusting pipe (322) configured to rotate in the through pipe (356) to open or close the nozzle (380).

The centripetal turbine apparatus may include a fluid inflow pipe (211) configured to provide the turbine 510 with a fluid and a polishing coupling barrel portion (250) which passes through a circular opening portion in a center of the turbine cover (520) and connects a lower opening portion of the fluid inflow pipe (211) to an upper opening portion of the upper nozzle plate (370), a watertight bearing (230) coupled to a perimeter of the polishing coupling barrel portion 250 to prevent the fluid from leaking between the turbine cover (520) and the polishing coupling barrel portion (250), and a structural coupling plate (358) formed at a top end of the through pipe (356) and coupled with an upper opening portion of the fluid inflow pipe (211).

The nozzle (380) may include a sliding plate (385) which is opened or closed between the lower nozzle plate (350) and the upper nozzle plate (370), a nozzle rotation shaft (388) which passes through the lower nozzle plate (350) and the upper nozzle plate (370), and a nozzle arm (386) which moves the sliding plate (385) according to rotation of the nozzle rotation shaft (388).

The centripetal turbine apparatus may further include a nozzle operating portion (320) coupled with a perimeter of the adjusting pipe (322) below the lower nozzle plate (350) and configured to drive the nozzles (380) according to rotation of the adjusting pipe (322). The nozzle operating portion (320) may include a plurality of operating bars (323) radially formed to rotate with the adjusting pipe (322), a plurality of connecting bars (328) coupled with ends of the operating bars (323), and a plurality of quadrangular poles (326) coupled with ends of the connecting bars (328) and configured to rotate the nozzle rotation shaft (388) according to movements of the operating bars (323) and the connecting bars (328).

The centripetal turbine apparatus may further include a sealing cover (111) which surrounds the turbine (510) and is coupled with a bottom of the fluid inflow pipe (211), an air pipe (116) connected to an inside of the sealing cover (111), and an air compressor (117) which injects air into the sealing cover (111) through the air pipe (116) to adjust pressure in the sealing cover (111).

### [Advantageous Effects]

A turbine apparatus according to the present invention may prevent a fluid and pressure thereof from leaking outside by installing a nozzle in a sealed turbine.

Also, efficiency of the turbine apparatus may be increased by applying as much kinetic energy of the fluid as possible to the turbine.

### [Description of Drawings]

FIG. 1 is a view of a centripetal force turbine apparatus according to one embodiment of the present invention.
FIG. 2 is a partial cross-sectional view illustrating the turbine apparatus of FIG. 1.
FIG. 3 is an exploded perspective view of the turbine apparatus of FIG. 1.
FIG. 4 is a detailed view illustrating a nozzle and a nozzle operating portion according to the present invention.
FIGS. 5 and 6 are detailed views illustrating a lower nozzle plate, an upper nozzle plate, and a nozzle according to the present invention.
FIG. 7 is a view of a turbine apparatus according to another embodiment of the present invention.
FIG. 8 is a detailed view illustrating a sealing cover of FIG. 7.

### [Modes of the Invention]

Embodiments disclosed in the specification will be described in detail with reference to the attached drawings. Regardless of signs in the drawings, equal or similar elements will be referred to with like reference numerals and an overlapped description thereof will be omitted. Also, in the description of the embodiments disclosed in the specification, a detailed description of a well-known technology of the related art will be omitted when it is deemed to obscure the essence of the embodiments disclosed in the specification. Also, it should be understood that the attached drawings are provided merely for understanding the embodiments disclosed in the specification, and the technical concept disclosed in the specification is not restricted by the attached drawings and includes all changes, equivalents, and substitutions within the concept and technical scope of the present invention.

A turbine apparatus according to the present invention includes a closed turbine 510. A turbine shaft 513 at a center part of the turbine 510 is supported by a bearing device 15 installed above the turbine 510, and the turbine 510 rotates around the turbine shaft 513. Here, the closed turbine 510 means a turbine sealed to completely surround a nozzle 380 which adjusts a flow rate.

An internal pressure and the like may increase due to a centrifugal force caused by rotation of the turbine 510 such that a pressure leak may occur. The present invention provides a closed turbine as a means for preventing such pressure leaks and additionally provides a turbine apparatus including the closed turbine as a method of increasing a capacity and further increasing efficiency.

Hereinafter, a turbine apparatus according to an embodiment of the present invention will be described in detail with reference to the attached drawings.

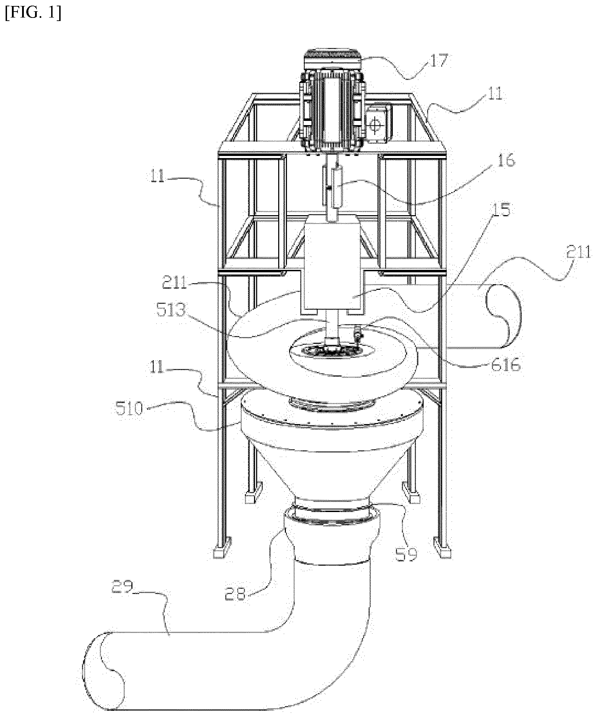

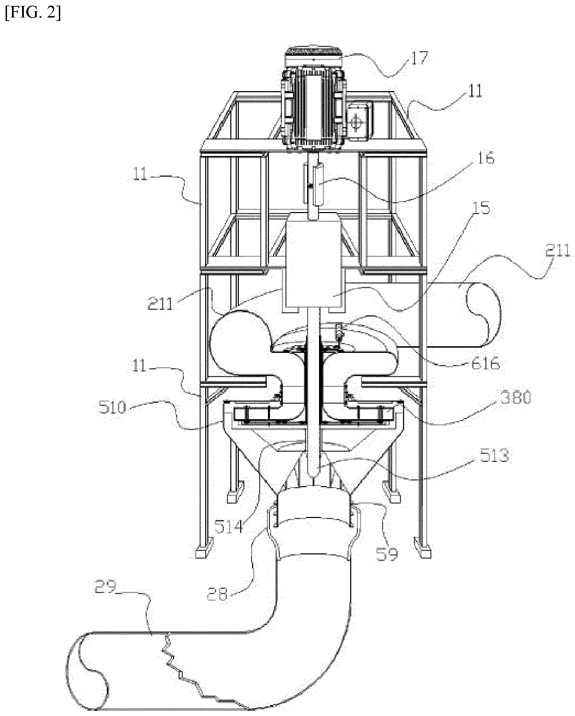

FIG. 1 is a view of a turbine apparatus according to one embodiment of the present invention, and FIG. 2 is a perspective cross-sectional view illustrating a cut part of FIG. 1.

Referring to FIGS. 1 and 2, the turbine apparatus of the present invention includes a generator 17 coupled with a top end of a steel structure 11, the turbine 510 having a funnel shape which has a bottom narrower than a top, the turbine shaft 513 rotating with the turbine 510, the bearing device 15 connected to a top of the turbine shaft 513, a shaft coupling device 16 connecting a bottom end of a rotation shaft of the generator 17 to a top end of the turbine shaft 513, a fluid inflow pipe 211 which injects a fluid into the turbine 510, and a water discharge pipe 29 connected to a bottom of the turbine 510.

The fluid inflow pipe 211 is configured to provide a fluid to the turbine 510 and has an end part having a flat shape with a vertical diameter gradually decreasing in a perimeter of the turbine shaft 513. Since a terminal end of the fluid inflow pipe 211 has a shape which gradually becomes narrower like a snail shell, a speed of the fluid may be accelerated.

The top of the turbine 510 is covered and sealed by a turbine cover 520 such that a plurality of such nozzles 380 are completely confined in the turbine 510. The turbine 510 rotates, with the turbine shaft 513, around the turbine shaft 513.

The plurality of nozzles 380 are configured to adjust an amount of the fluid injected into the turbine 510 from the fluid inflow pipe 211 and are installed in the turbine 510 which is sealed to prevent a fluid leak and a fluid pressure leak. Also, each of the nozzles 380 is mechanically attached and tightly fixed to an extending part of the fluid inflow pipe 211 located thereabove.

The turbine shaft 513 is installed to pass through a shaft insertion frame 514, passes through a part of the fluid inflow pipe 211, and is rotatably fixed to the bearing device 15. Also, the turbine shaft 513 is coupled with the shaft of the generator 17 through the shaft coupling device 16.

A hydraulic cylinder 616 adjusts a flow rate of a fluid by adjusting an opening angle of the nozzle 380 so as to adjust a rotation speed of the turbine 510. Also, a fluid passing the turbine 510 through the nozzle 380 is discharged outside using a discharging connecting pipe 28 through the water discharge pipe 29 connected to the turbine 510. Here, a plurality of blocking plates 59 are installed to prevent the fluid from retrogressing toward a top of an outside of the turbine 510 due to a centrifugal force of high-speed rotation during discharging.

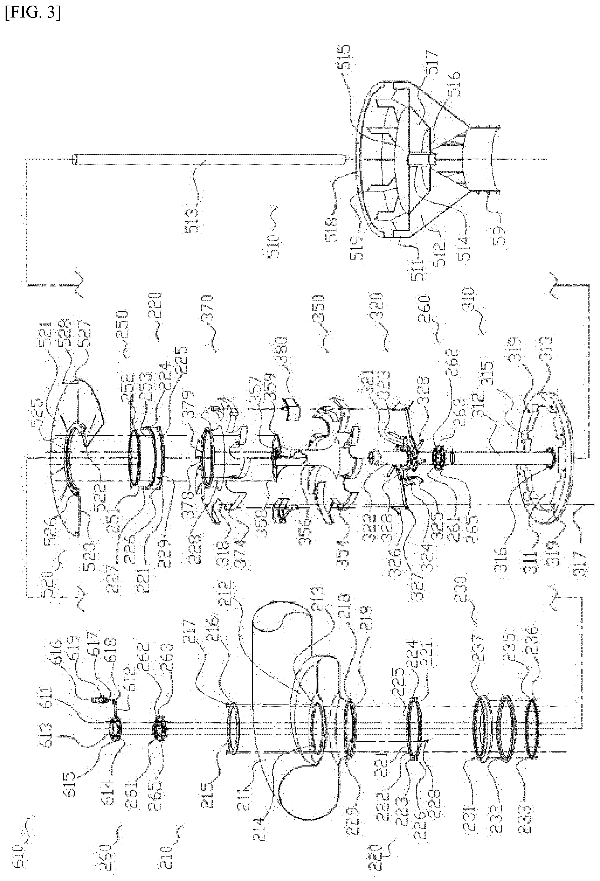

FIG. 3 is an exploded perspective view of the turbine apparatus according to the present invention. As shown in FIG. 3, a fluid inflow pipe portion 210 includes a pipe leveling portion 212 having a cochlear duct shape at an end part of the fluid inflow pipe 211 with a diameter thereof being decreased and flattened.

A coupling plate 213 having a coupling hole 214 having a flange-coupled structure is installed at a top of the pipe leveling portion 212, and a coupling flange 218 having a flange hole 219 having a flange-coupled structure is also provided at a bottom of the pipe leveling portion 212.

A polishing coupling barrel portion 250 passes through a circular opening portion in a center of the turbine cover 520 and connects a lower opening portion of the fluid inflow pipe 211 to an upper opening portion of an upper nozzle plate 370. The fluid passes through the upper opening portion of the upper nozzle plate 370 via the polishing coupling barrel portion 250.

A top of the polishing coupling barrel portion 250 is coupled with the coupling flange 218, and a bottom of the polishing coupling barrel portion 250 is firmly coupled with a coupling flange 378 of the upper nozzle plate 370. The polishing coupling barrel portion 250 is coupled between the fluid inflow pipe portion 210 and the turbine 510 to prevent the fluid from leaking between the fluid inflow pipe portion 210 and the turbine 510.

A watertight bearing 230 is coupled to a perimeter of a polishing coupling barrel 251 to prevent the fluid from leaking between the turbine cover 520 and the polishing coupling barrel portion 250. An exterior of the polishing coupling barrel 251 is polished such that a surface thereof is treated to be smooth and solid. The watertight bearing 230 is attachable to or detachable from the polishing coupling barrel 251. Also, a semicircular coupling tensile plate 221, as a flange-coupling component, is coupled with the perimeter of the polishing coupling barrel 251, and the polishing coupling barrel 251 includes an upper coupling step 252 and a lower coupling step 253. One pair of such coupling tensile plates 221 are coupled with a perimeter of the upper coupling step 252 and another pair of coupling tensile plates 221 are coupled with a perimeter of the lower coupling step 253 and they are coupled with each other by a tensile bolt 226 inserted in tensile bolt holes 224 on both sides and a tensile nut 227. Also, the coupling tensile plates 221 coupled with the lower coupling step 253 are coupled with the coupling flange 378 using flange bolts 228 and flange nuts 229 which are inserted in flange holes 379 and coupling bolt holes 225, respectively.

A nozzle fixing plate 310 includes a fixing circular plate 311 coupled with a shaft-through pipe 312, and a circularly protruding roller rail 316 is formed in a center part of the fixing circular plate 311 coupled with the shaft-through pipe 312. Also, when a coupling step 313 having a certain height is formed on an outer perimeter of the fixing circular plate 311, a plurality of nozzle shaft grooves 315 are formed on an inner surface of the coupling step 313 and a plurality of coupling holes 319 passing through the fixing circular plate 311 are formed on a top surface of the coupling step 313.

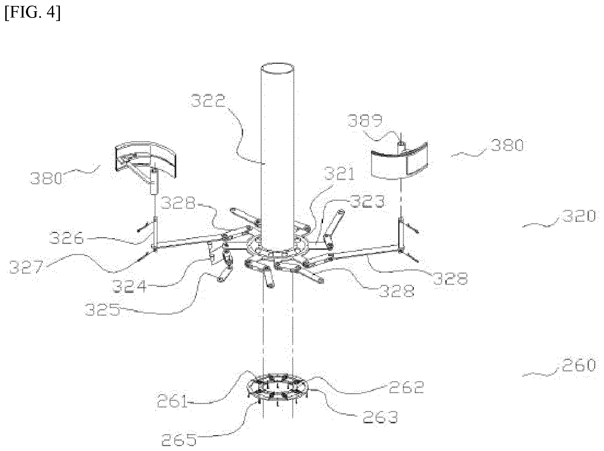

As shown in FIG. 4, a nozzle operating portion 320 is configured to drive the nozzle 380 and is installed between a nozzle fixing plate 310 and a lower nozzle plate 350. The nozzle operating portion 320 is coupled with a perimeter of an adjusting pipe 322 below the lower nozzle plate 350 and drives the nozzles 380 according to rotation of the adjusting pipe 322.

The nozzle operating portion 320 includes an operating circular plate 321 having a circular plate shape, a plurality of operating bars 323, and a plurality of connecting bars 328. The adjusting pipe 322 passes through a central part of the operating circular plate 321 and is coupled with the operating circular plate 321. Also, the adjusting pipe 322 rotates inside a through pipe 356 to open or close the nozzles 380.

The operating bars 323 protrude from an outer perimeter of the operating circular plate 321 in a radial shape and are spaced at certain intervals apart. The connecting bars 328 are connected to respective ends of the operating bars 323, and each of the connecting bars 328 includes a pair of sub bars. The operating bars 323 and the connecting bars 328 are coupled with each other by connecting pins 324, and the connecting bars 328 diffract around the connecting pins 324. Quadrangular holes 325 for coupling the nozzles 380 are formed at the ends of the connecting bars 328. Quadrangular poles 326 are coupled with the ends of the connecting bars 328, that is, the quadrangular holes 325, and rotate nozzle rotation shafts 388 according to movements of the operating bars 323 and the connecting bars 328.

A roller portion 260 below the nozzle operating portion 320 includes a plurality of rotating rollers 261, and the rotating rollers 261 are supported by an inner coupling ring 262 and an outer coupling ring 263 and are coupled with a bottom of the operating circular plate 321 of the nozzle operating portion 320 by a plurality of coupling bolts 265. Also, the rotating rollers 261 are mounted on the roller rail 316 while the shaft-through pipe 312 is inserted in the rotating rollers 261.

The nozzles 380 are installed between the lower nozzle plate 350 and the upper nozzle plate 370, and the quadrangular pole 326 passes through the quadrangular hole 389 of the nozzle rotation shaft 388 to be aligned with the quadrangular holes 325 and rotation shafts of the nozzles 380. Each of the nozzles 380 is located between an outer perimeter of the lower nozzle plate 350 and an outer perimeter of the upper nozzle plate 370, and the fixing pin 327 is inserted into and supports the quadrangular pole 326 to prevent the quadrangular pole 326 from deviating from the connecting bar 328.

The nozzle fixing plate 310, the roller portion 260, the nozzle operating portion 320, the lower nozzle plate 350, the nozzles 380, and the upper nozzle plate 370 are sequentially coupled, and a coupling bolt 317 is inserted to pass through the coupling hole 319 of the nozzle fixing plate 310, a coupling hole 354 of the lower nozzle plate 350, and a coupling hole 374 of the upper nozzle plate 370 and is tightened by a coupling nut 318.

The turbine 510 includes a radial-shaped turbine blade 512 coupled with an inside of a turbine container 511 having a funnel shape for obtaining an internal pressure while rotating. An upper plate 515 and a lower plate 516 are installed in a central part of the turbine blade 512, and the shaft insertion frame 514 is firmly coupled with a center of the turbine blade 512 and passes through an inner container 517. The inner container 517 is formed between the upper plate 515 and a lower plate 516. Components in contact with the turbine blade 512 are coupled through welding, and the turbine shaft 513 is inserted into and fixed to the shaft insertion frame 514.

A connecting portion 518 has a surface edge shape which is partially bent in a central direction is provided at a certain upper place of the turbine container 511 and includes a coupling hole 519 for being coupled with the turbine cover 520. A circular blocking plate 59 preventing water from scattering upward due to a centrifugal force caused by high-speed rotation is provided at a bottom end of a discharge side of the turbine container 511.

The nozzle fixing plate 310, the nozzle operating portion 320, the lower nozzle plate 350, the nozzles 380, the upper nozzle plate 370, and the polishing coupling barrel portion 250, after being sequentially coupled with one another, are inserted into and installed in an internal space of the turbine container 511, and then the turbine cover 520 is coupled with the turbine container 511.

The turbine cover 520 includes a cover plate 521 having a circular plate shape including a circular hole in a center, and an inner part of the cover plate 521 includes an internal bent portion 522 which is folded vertically. Also, the turbine cover 520 includes cover blades 523 disposed at certain intervals in a radial shape to generate a centrifugal force on a bottom surface thereof. A pressure plate 525 is fixed to the cover plate 521 using a pressure plate fixing bolt 526 inside the turbine cover 520.

The watertight bearing 230 is a part which comes into contact with and is rubbed against the pressure plate 525 to prevent the fluid from leaking between the turbine cover 520 and the polishing coupling barrel portion 250. A rotating portion 232 is inserted into a fixing portion 231 that is a bearing body, and then a coupling portion 233 comes into contact with and is coupled with the fixing portion 231 using a coupling bolt 236 passing through a coupling hole 235. The watertight bearing 230 formed as described above is coupled with a perimeter of the polishing coupling barrel 251 and is fixed to the polishing coupling barrel 251 at a certain position using a support bolt 237.

Two semicircular tensile plates 221 are coupled with a groove formed in the upper coupling step 252 of the polishing coupling barrel 251 such that an inserted protruding portion 222 is completely inserted, and the tensile bolt 226 and the tensile nut 227 are tightened to the tensile bolt hole 224 formed in a tensile step 223 with a strong tensile force.

The tensile plates 221 are installed in the polishing coupling barrel 251 and the flange bolt 228 passing through a plurality of such coupling holes 225 formed in the tensile plates 221 and the flange hole 219 of the coupling flange 218 at a bottom end of the fluid inflow pipe 211 is coupled with the flange nut 229 through being tightened so as to firmly couple the bottom end of the fluid inflow pipe 211 with the polishing coupling barrel 251.

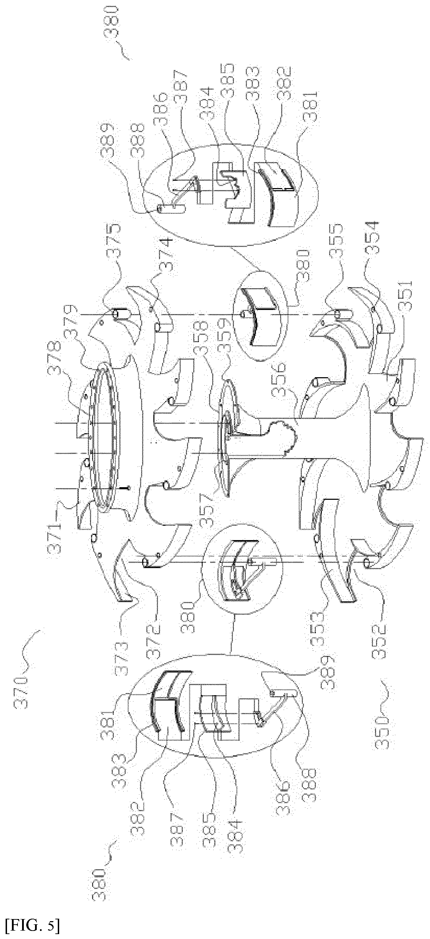

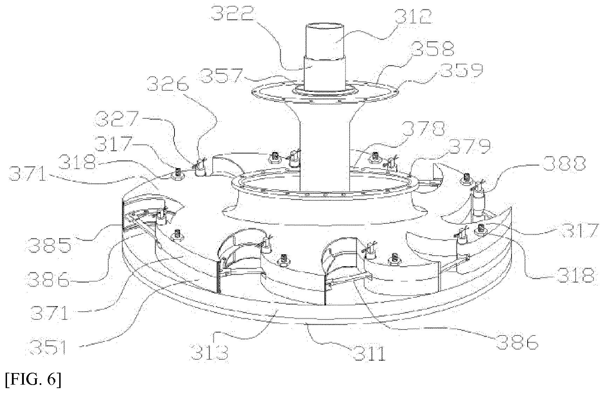

FIGS. 5 and 6 are detailed views illustrating the lower nozzle plate 350, the upper nozzle plate 370, and the nozzles 380 of the present invention.

As shown in FIGS. 5 and 6, the lower nozzle plate 350 and the upper nozzle plate 370 are coupled with each other in a space between the upper plate 515 in the turbine 510 and the turbine cover 520, and the nozzles 380 are coupled between the lower nozzle plate 350 and the upper nozzle plate 370.

A structural coupling plate 358 is formed at a top end of the through pipe 356 and is coupled with an upper opening portion of the fluid inflow pipe 211. The structural coupling plate 358 includes a plurality of coupling holes 359 on a perimeter thereof and is located to be leveled at the same height as that of the upper coupling plate 213 of the fluid inflow pipe 211 in an installation operation. The upper coupling plate 213 includes a plurality of such coupling holes 214, and a pipe nozzle connecting plate 215 having a circular strand shape is overlapped with and installed on a top of the upper coupling plate 213. The pipe nozzle connecting plate 215 includes coupling holes 216, and the coupling holes 216 are formed at positions corresponding to the coupling holes 359 of the structural coupling plate 358. Also, the pipe nozzle connecting plate 215, the upper coupling plate 213, and the structural coupling plate 358 are bound to each other using a coupling bolt 217 to couple and fix the fluid inflow pipe 211 and the lower nozzle plate 350 to each other.

A nozzle controller 610 of FIG. 3 is coupled with a top end of the adjusting pipe 322 and rotates the adjusting pipe 322. The nozzle controller 610 includes an operating circular plate 611, an operating bar 612, and an extending sleeve 613. The extending sleeve 613 is coupled with an outer circumference of the operating circular plate 611 having a circular plate shape and is located at a certain height to allow the adjusting pipe 322 to pass therethrough. The operating circular plate 611 and the operating bar 612 are rotated by a hydraulic cylinder 616 and transfer power to the nozzle operating portion 320.

The roller portion 260 is attached to a bottom end of the operating circular plate 611, and the plurality of rollers 261 are supported by the inner coupling ring 262 and the outer coupling ring 263 and are attached to a bottom of the operating circular plate 611 using the coupling bolts 265. Also, the adjusting pipe 322 is inserted into the operating circular plate 611, and the operating circular plate 611 is mounted on a roller rail 357 on the structural coupling plate 358 while being smoothly rotatable. The nozzle controller 610 is firmly coupled with the adjusting pipe 322 by tightening an attachment bolt 615 with an attachment hole 614 formed in the extending sleeve 613. Accordingly, since the adjusting pipe 322 rotates according to rotation of the operating circular plate 611, power may be transferred to the nozzle operating portion 320.

The operating bar 612 and a pivotable connecting portion 618 which acts as a bearing are connected to appropriate positions of the hydraulic cylinder 616 and a piston rod 617, and a body of the hydraulic cylinder 616 is also fixed, to be slightly pivotable, to a top of the pipe leveling portion 212 using a cylinder fixing bolt 619.

The lower nozzle plate 350 of FIGS. 5 and 6 is coupled with the through pipe 356 at a certain height and passing through a nozzle plate bottom 351 at a center thereof. When the lower nozzle plate 350 and the upper nozzle plate 370 are coupled with each other, the through pipe 356 passes through an opening portion at a center of the upper nozzle plate 370 and protrudes upward from the upper nozzle plate 370. The roller rail 357 which is a circular track is formed at a center of the structural coupling plate 358 coupled with the top end of the through pipe 356. Also, the plurality of coupling holes 359 are formed on a periphery of the structural coupling plate 358.

A nozzle outer wall 353, which forms a wall at a certain height in a radial shape, is formed at a partial area of a perimeter of a top surface of the nozzle plate bottom 351, and the coupling hole 354 and a nozzle rotation hole 355 are formed while perpendicularly passing through the nozzle outer wall 353. Nozzle opening portion grooves 352 for installing the nozzles 380 are installed in the nozzle plate bottom 351 in which the nozzle outer wall 353 is not formed, which corresponds to the upper nozzle plate 370 opposite thereto and forms the same structural shape.

It may be seen that the upper nozzle plate 370 corresponds to the lower nozzle plate 350 and has the same functional structure. The coupling flange 378 including the flange holes 379 is provided at a certain height of a central part of a nozzle cover 371.

A nozzle outer wall 373, which forms a wall at a certain height in a radial shape, is formed at a perimeter of a bottom surface of the nozzle cover 371, and the coupling hole 374 and a nozzle rotation hole 375 are formed while perpendicularly passing through the nozzle outer wall 373. Nozzle opening portion grooves 372 configured to install the nozzles 380 are installed in the nozzle cover 371 in which the nozzle outer wall 373 is not formed, which corresponds to the lower nozzle plate 350 opposite thereto and forms the same structural shape.

The nozzle 380 is slidable and rotates around a central shaft and includes the nozzle rotation shaft 388 and a nozzle arm 386 connected thereto. The nozzle rotation shaft 388 is formed to pass through the lower nozzle plate 350 and the upper nozzle plate 370. A quadrangular hole 389 is formed in the nozzle rotation shaft 388, and the quadrangular pole 326 is inserted into the quadrangular hole 389. The quadrangular hole 389 and the quadrangular pole 326 rotate together. The nozzle arm 386 moves a sliding plate 385 according to rotation of the nozzle rotation shaft 388. The nozzle arm 386 is coupled with the sliding plate 385 including a plate coupling hole 384 through tightening using a coupling bolt 387, and the sliding plate 385 is inserted into a nozzle case 381.

When the operating bar 323 and the connecting bar 328 rotate in one direction with the operating circular plate 321, the sliding plate 385 moves so as to open a nozzle discharge hole 382. On the other hand, when the operating bar 323 and the connecting bar 328 rotate in another direction with the operating circular plate 321, the sliding plate 385 moves so as to close the nozzle discharge hole 382.

The nozzle case 381 includes protruding coupling portions 383 coupled with the nozzle opening portion groove 352 of the nozzle plate bottom 351 and the nozzle opening portion groove 372 of the nozzle cover 371, and the protruding coupling portions 383 are inserted into and fixed to the nozzle opening portion groove 352 and the nozzle opening portion groove 372.

When the sliding plate 385, with which the nozzle arm 386 is coupled, is inserted into the nozzle case 381, the nozzle 380 is completed. When the nozzle rotation shaft 388 is inserted into the nozzle rotation hole 355 of the lower nozzle plate 350 and the nozzle rotation hole 375 of the upper nozzle plate 370, installation of the nozzle 380 is completed.

The nozzle operating portion 320 is inserted and installed between the nozzle fixing plate 310 and the lower nozzle plate 350 and drives the nozzle 380. The nozzle operating portion 320 is coupled with the adjusting pipe 322 passing through a central part of the operating circular plate 321 having a circular plate shape and rotates with the adjusting pipe 322. The plurality of operating bars 323 and the connecting bars 328 are radially formed on the outer circumference of the operating circular plate 321, and the operating bars 323 rotate according to rotation of the adjusting pipe 322 and the operating circular plate 321.

A method of driving the turbine apparatus having the above-described structure will be described as follows.

When a fluid flows in through the fluid inflow pipe 211, a flow speed of the fluid increases at a terminal end of the fluid inflow pipe 211. Also, the fluid is injected into a space between the upper nozzle plate 370 and the lower nozzle plate 350 through the polishing coupling barrel 251 and reaches the nozzle 380.

Here, when the nozzle 380 is opened, the fluid is injected into the turbine container 511 and applies pressure to the turbine blade 512. Accordingly, the turbine container 511, the turbine cover 520, the turbine blade 512, and the turbine shaft 513 rotate together. Also, this rotating force is transferred to the generator 17. As described above, while the turbine 510 rotates, the nozzle fixing plate 310, the upper nozzle plate 370, the lower nozzle plate 350, the polishing coupling barrel portion 250, and the like in the turbine 510 do not rotate and are fixed.

Afterwards, the fluid is discharged below the turbine container 511 through a space between the inner container 517 and the turbine container 511. Since the turbine container 511 has a shape in which a bottom gradually decreases like a funnel shape, a centripetal force is generated in the fluid. Accordingly, the turbine apparatus of the present invention may provide a centripetal force to a fluid unlike conventional techniques.

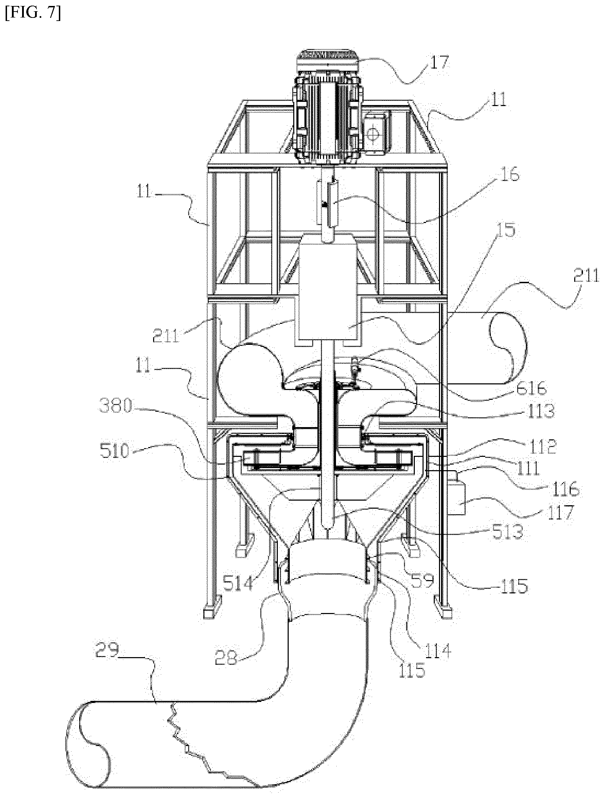

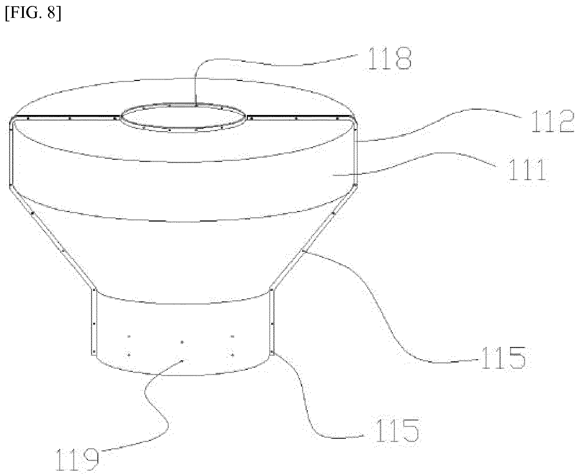

FIG. 7 is a view of a turbine apparatus according to another embodiment of the present invention, and FIG. 8 is a detailed view illustrating a sealing cover of FIG. 7.

The turbine apparatus of FIG. 7 is similar to the turbine apparatus of FIG. 1 and further includes a sealing cover 111 which surrounds a perimeter of the turbine 510.

As shown in FIGS. 7 and 8, the sealing cover 111 is further formed outside the turbine 510 and a top of the sealing cover 111 is fixed and supported by the fluid inflow pipe 211.

An opening portion is formed on a top surface of the sealing cover 111 to allow a fluid to flow therein, and a plurality of first coupling holes 118 configured to be coupled with the fluid inflow pipe 211 and the polishing coupling barrel 251 are formed on a perimeter of the opening portion. Also, a coupling bolt 113 is inserted into the first coupling hole 118, and the inserted coupling bolt 113 is bound to a nut.

Also, a plurality of second coupling holes 119 are formed in a contact surface of a bottom of the sealing cover 111 which comes into contact with the discharge connecting pipe 28, and a coupling bolt 114 is inserted into the second coupling hole 119 to couple the sealing cover 111 with the discharge connecting pipe 28. Also, an opening portion for discharging the fluid is formed in a bottom surface of the sealing cover 111.

The sealing cover 111 is configured as a pair of covers to completely surround the turbine 510 which rotates without contact with the turbine 510, and coupling holes 115 for coupling the pair of covers are formed in a sealing blade 112 at which the pair of covers come into contact with each other. The coupling holes 115 are coupled by tightening up the coupling bolt 114 so as to form one sealing structure.

Also, an air pipe 116 passing through the sealing cover 111 may be installed, and air may be injected into the sealing cover 111 through the air pipe 116 using an external air compressor 117. A reason for injecting the air into the sealing cover 111 is to adjust pressure inside the sealing cover 111, that is, pressure of a space between the turbine 510 and the sealing cover 111. For example, when the pressure in the space between the turbine 510 and the sealing cover 111 increases, it is possible to prevent a fluid inside the turbine 510 from leaking outside.

Although the exemplary embodiments of the present invention have been illustrated and described above to exemplify the principle of the present invention, the present invention is not limited to the illustrated and described components and operations. It should be understood well by those skilled in the art that a variety of changes and modifications of the present invention may be made without departing from the concept and scope of the appended claims.

## Claims

1. A centripetal turbine apparatus comprising:
a turbine (510) which comprises a funnel-shaped turbine container (511), a radial-shaped turbine blade (512) coupled inside the turbine container (511), an upper plate (515) and a lower plate (516) formed inside the turbine blade (512), an inner container (517) between the upper plate (515) and the lower plate (516), and a shaft insertion frame (514), into which a turbine shaft (513) is inserted, and which rotates with the turbine shaft (513) according to an inflow of a fluid;
a turbine cover (520) coupled with a top end of the turbine (510) to seal the turbine (510);
a lower nozzle plate (350) and an upper nozzle plate (370) coupled with each other in a space between the upper plate (515) in the turbine (510) and the turbine cover (520);
a plurality of nozzles (380) coupled between the lower nozzle plate (350) and the upper nozzle plate (370) and configured to adjust an amount of the fluid which flows into the turbine (510);
a through pipe (356) coupled with a center of a top surface of the lower nozzle plate (350) and configured to pass through the lower nozzle plate (350) and the upper nozzle plate (370); and
an adjusting pipe (322) configured to rotate in the through pipe (356) to open or close the nozzle (380).

2. The centripetal turbine apparatus of claim 1, comprising:
a fluid inflow pipe (211) configured to provide the turbine 510 with a fluid; and
a polishing coupling barrel portion (250) which passes through a circular opening portion in a center of the turbine cover (520) and connects a lower opening portion of the fluid inflow pipe (211) to an upper opening portion of the upper nozzle plate (370).

3. The centripetal turbine apparatus of claim 2, further comprising a watertight bearing (230) coupled to a perimeter of the polishing coupling barrel portion 250 to prevent the fluid from leaking between the turbine cover (520) and the polishing coupling barrel portion (250).

4. The centripetal turbine apparatus of claim 1, further comprising a structural coupling plate (358) formed at a top end of the through pipe (356) and coupled with an upper opening portion of a fluid inflow pipe (211).

5. The centripetal turbine apparatus of claim 1, wherein the nozzle (380) comprises:
a sliding plate (385) which is opened or closed between the lower nozzle plate (350) and the upper nozzle plate (370);
a nozzle rotation shaft (388) which passes through the lower nozzle plate (350) and the upper nozzle plate (370); and
a nozzle arm (386) which moves the sliding plate (385) according to rotation of the nozzle rotation shaft (388).

6. The centripetal turbine apparatus of claim 5, further comprising a nozzle operating portion (320) coupled with a perimeter of the adjusting pipe (322) below the lower nozzle plate (350) and configured to drive the nozzles (380) according to rotation of the adjusting pipe (322).

7. The centripetal turbine apparatus of claim 6, wherein the nozzle operating portion (320) comprises:
a plurality of operating bars (323) radially formed to rotate with the adjusting pipe (322);
a plurality of connecting bars (328) coupled with ends of the operating bars (323); and
a plurality of quadrangular poles (326) coupled with ends of the connecting bars (328) and configured to rotate the nozzle rotation shaft (388) according to movements of the operating bars (323) and the connecting bars (328).

8. The centripetal turbine apparatus of claim 1, further comprising a nozzle controller (610) coupled with a top end of the adjusting pipe (322) and configured to rotate the adjusting pipe (322).

9. The centripetal turbine apparatus of claim 1, further comprising a sealing cover (111) which surrounds the turbine (510) and is coupled with a bottom of the fluid inflow pipe (211).

10. The centripetal turbine apparatus of claim 9, further comprising:
an air pipe (116) connected to an inside of the sealing cover (111); and
an air compressor (117) which injects air into the sealing cover (111) through the air pipe (116) to adjust pressure in the sealing cover (111).

11. The centripetal turbine apparatus of claim 1, wherein the turbine cover (520) comprises cover blades (523) disposed radially on a lower surface thereof at certain intervals.
